# DEMANDE DE BREVET EUROPEEN

(11) **EP 2 133 847 A1**
(43) Date de publication de la demande: **16.12.2009**
(21) Numéro de dépôt: 09157559.7
(22) Date de dépôt: 07.04.2009
(51) Int. Cl.: G07F 17/32

(54) **Procédé et système pour contrôler l'accès à des sites ou contenus, tels que des jeux en ligne, et supports de contrôle d'accès pour la mise en oeuvre de ce procédé**

(30) Priorité: 13.06.2008 FR 0853954; 04.11.2008 FR 0857501
(71) Demandeur: Druel, François, 75015 Paris (FR); Schott, Alain, 95320 Saint Leu la Forêt (FR)
(72) Inventeur: Druel, François, 75015 Paris (FR); Schott, Alain, 95320 Saint Leu la Forêt (FR)
(74) Mandataire: Pontet, Bernard

(57) **Abrégé**

Procédé pour contrôler l'accès à des sites ou contenus, notamment à des jeux ou sites en ligne sur un réseau de communication tel qu'Internet ou un réseau de communication mobile, mettant en oeuvre un site d'intermédiation connecté via ce réseau de communication à une pluralité de sites en ligne.
Ce site d'intermédiation assure notamment des fonctions de contrôle d'accès avec filtrage selon l'âge, de régulation des flux et échanges d'information, et éventuellement de contrôle de transaction.

Voir figure 11.
Utilisation notamment dans le domaine des jeux en ligne et pour le contrôle d'accès à des sites ou contenus en ligne, par exemple des contenus audiovisuels réservés aux adultes, ou à des services en ligne par exemple pour la distribution de boissons alcoolisées.

## Description

La présente invention concerne un procédé pour contrôler l'accès à des sites ou contenus, tels que des jeux en ligne. Elle vise également un système de contrôle d'accès des sites ou contenus mettant en oeuvre ce procédé, ainsi que des supports de contrôle d'accès pour la mise en oeuvre de ce procédé.

### DOMAINE DE L'INVENTION

Cette invention est particulièrement adaptée au contrôle d'accès à des jeux en ligne sur un réseau de communication, par exemple sur Internet ou sur un réseau de communication mobile, mais peut aussi être mise en oeuvre pour contrôler l'accès à des sites interdits aux mineurs ou susceptibles de heurter leur sensibilités, tels que des sites pornographiques ou violents, ainsi que l'accès à des produits réglementés à l'égard des mineurs, tels que l'alcool ou le tabac.

### PROBLEMATIQUE ET ART ANTERIEUR

On observe actuellement un développement considérable de l'offre de jeux en ligne sur des réseaux de communication, par exemple sur Internet ou sur un réseau de communication mobile. Dans de nombreux pays, il est déjà possible d'accéder en ligne à des jeux d'argent proposant des gains, et d'autres pays prévoient à terme une ouverture du marché des jeux avec gain sur des réseaux de communication, et en particulier sur Internet ou sur un réseau de communication mobile.

Or, une telle ouverture risque de poser plusieurs problèmes de nature sociétale au nombre desquels la préservation de l'anonymat des joueurs et l'indispensable protection des mineurs. En effet, dans la situation actuelle, n'importe qui, quel que soit son âge, peut actuellement accéder sans réelle difficulté à des sites de jeux en ligne, et s'il dispose d'un moyen de paiement accepté en ligne, jouer et percevoir des gains.

De tels moyens de paiement permettant l'accès à des jeux en ligne existent déjà tels que ceux divulgués dans le document WO 01/41037 qui décrit un système de paiement électronique utilisant des cartes à prépaiement qui peuvent être utilisés de manière polyvalente en vue du paiement de services et de biens.

S'agissant du contrôle d'accès des mineurs à des sites de transaction, il existe déjà des procédés et appareils de réalisation de transactions commerciales électroniques avec des mineurs, comme celui divulgué dans le document WO 00/36570A1 qui propose un guichet automatique virtuel (VATM) dans lequel les fonds sont transférés d'un compte existant vers un compte de passeport Internet.

S'agissant de la sécurisation des gains et de la constitution de preuve, on connaît déjà par le document WO 02/23863A1 un procédé pour générer des preuves de l'envoi et de réception d'un document électronique par un réseau de transmission.

Actuellement, le filtrage sur les sites en ligne ne se fait que sur une base déclarative, en cliquant sur un bouton, ce qui revient en fait à annihiler tout filtrage réel. Par ailleurs, bien que l'utilisation d'une carte bancaire constitue une présomption sérieuse de majorité, cela ne peut être considéré comme un mode efficace de filtrage.

De plus, ce type de contrôle par paiement présente l'inconvénient majeur d'éventuellement laisser accessibles à un mineur des contenus qui sont de nature à heurter sa sensibilité. Par exemple, on peut citer les sites comportant des démonstrations incitatives gratuites. Un contrôle fondé sur la mise en oeuvre d'une carte de paiement arrive donc trop tard.

Le document US 2004/053692A1 divulgue un procédé de vérification divulgué dans ce document est entièrement basé sur un contrôle biométrique, typiquement un contrôle d'empreinte digitale. A chaque fois qu'un joueur souhaite accéder à un jeu en ligne, il entre un code d'identification personnel et il place l'un de ses doigts dans un lecteur prévu pour saisir une image de son empreinte. Cette image est ensuite transférée avec le code d'identification à un système d'exploitation distant comportant une base de données contenant les empreintes digitales scannées de l'ensemble des joueurs s'étant préalablement inscrits, à l'issue d'une phase initiale de validation (« vérification d'identité et éligibilité ») et puis de saisie de leur empreinte digitale qui est alors stockée dans la base de données du système. Des données d'identification relatives au joueur sont stockées dans une base de données - qui est d'ailleurs décrite comme partie intégrante du système d'exploitation des jeux - et à chaque fois qu'il souhaite accéder à un jeu en ligne, son empreinte digitale et son code d'identification sont transmises à ce système pour vérification.

Par ailleurs, la carte de paiement est un moyen de paiement mais non une preuve d'identité. De plus, il n'est pas demande de code secret (code PIN, Personal Information Number). Il existe aussi des cartes de paiement procurées à des mineurs par certains réseaux bancaires. En effet, la cinématique habituelle du commerce électronique fait que l'utilisation d'une carte bancaire ne se fait qu'en fin de processus commercial, au moment du paiement.

Ces procédés, s'ils apportent des tentatives de solution à des aspects spécifiques des transactions de jeu, n'apportent en fait pas de solution globale au problème posé. Ainsi, au regard de l'art antérieur, il n'apparaît pas de solution disponible permettant à la fois de fournir une preuve certaine de jeu et de gain, tout en assurant une préservation de l'anonymat des joueurs et l'objectif de protection des mineurs.

Le but de la présente invention est de proposer une solution originale et inventive d'accès à des sites en ligne, par exemple des jeux payants en ligne sur internet ou sur tout autre réseau de communication. Cette solution permet notamment de garantir le prépaiement via un réseau physique de points de vente, l'anonymat de la participation et de l'attribution des gains, la vérification de caractéristiques particulières chez l'acheteur, imposées par la réglementation, par exemple, atteinte de la majorité légale de l'acheteur, la preuve irréfutable et bilatérale de jeu en ligne, sa conservation durant au moins la période d'exigibilité des gains. Il s'agit ainsi d'apporter au jeu en ligne un niveau de protection des mineurs équivalent à celui existant à ce jour dans le monde physique.

### EXPOSE DE L'INVENTION

Cet objectif général de contrôle d'accès à des serveurs en ligne et tout particulièrement à des jeux en lige, avec la préoccupation de la protection des mineurs, est atteint avec un procédé pour contrôler l'accès à des sites ou contenus, notamment à des jeux ou sites en ligne sur un réseau de communication tel qu'Internet ou un réseau de communication mobile, comprenant, en un site d'intermédiation connecté via ledit réseau de communication à une pluralité de sites en ligne:
- une étape (1) pour recevoir d'un terminal utilisateur connecté via ledit réseau de communication audit site d'intermédiation, des informations personnelles relatives à un utilisateur dudit terminal, ces informations personnelles comprenant des informations d'identité,
- une étape (2) pour traiter lesdites informations personnelles selon au moins un critère discriminant, pour générer des données de certificat numérique sous condition de satisfaction dudit critère discriminant, et pour transmettre lesdites données de certificat numérique audit terminal utilisateur,
- une étape (3) pour permettre une connexion dudit terminal utilisateur via ledit réseau de communication à au moins un site parmi ladite pluralité de sites en ligne,
- une étape (4) pour gérer au sein dudit site d'intermédiation un compte attaché audit utilisateur, ce compte intégrant une pluralité de données attachées respectivement à des transactions effectuées entre ledit terminateur utilisateur et le
ou lesdits sites connectés parmi ladite pluralité de sites en ligne, et
- une étape (5) pour traiter les données de transaction intégrées dans ledit compte utilisateur et pour délivrer vers un site tiers connecté via ledit réseau de communication des données de prélèvement issues du traitement desdites données de transaction.

Avec le procédé de contrôle d'accès selon l'invention, on dispose d'un outil efficace et souple pour réguler l'accès, la consultation, les échanges et l'interactivité entre un individu et des sites ou contenus, tels que des jeux en ligne.

Ce procédé assure la convergence incontournable et systématisée vers un site d'intermédiation, de l'ensemble des flux d'informations échangées entre un individu et des sites ou contenus afin d'en réguler l'accès, la consultation, les échanges et l'interactivité, tels que des jeux en ligne. Cette convergence et cette régulation des flux d'information peuvent être assurées par le site d'intermédiation mis en oeuvre dans le procédé selon l'invention tout en étant transparentes aux utilisateurs.

De plus, on peut prévoir des modes de mises en oeuvre du procédé selon l'invention dans lesquelles plusieurs sites d'intermédiation peuvent coexister au sein d'un ou plusieurs réseaux de communication. Ces sites d'intermédiation peuvent par exemple être dédiés soit à un domaine d'activité spécifique ou thématique, soit à des ensembles génériques de sites en ligne. On peut ainsi prévoir que des opérateurs de sites en ligne puissent être partenaires d'un ou plusieurs sites d'intermédiation accessibles sur des réseaux de communication.

Il est à noter que le site ou la plateforme d'intermédiation peut effectuer une opération de prélèvement automatisée sur un ensemble de transactions effectuées par un même utilisateur avec une pluralité de sites en ligne. Cette opération de prélèvement est donc centralisée, évitant ainsi d'avoir à effectuer une multitude de prélèvements distincts.

Par ailleurs, la convergence des flux d'information à travers un site d'intermédiation permet le cas échéant d'effectuer des opérations de contrôle sur les flux d'information et les transactions effectuées entre des utilisateurs et des sites en ligne.

En ce qui concerne l'étape de traitement (étape 2), deux modes d'authentification de requérants peuvent être envisagés, à titre d'exemples non limitatifs :
- un traitement d'une copie, par exemple sous la forme d'un document numérisé, d'une pièce d'identité du requérant, en complément du traitement d'un formulaire rempli en ligne,
- un traitement de requêtes automatisées, prévu pour vérifier que le numéro de la pièce d'identité du requérant est bien celle enregistrée par une entité administrative compétente en relation avec le site d'intermédiation.

Le procédé de contrôle d'accès peut en outre comprendre, à partir du site d'intermédiation, une étape pour archiver des données de transaction effectuées entre ledit terminal utilisateur et des sites en ligne via ledit site d'intermédiation.

Le procédé de contrôle d'accès selon l'invention procure notamment les effets techniques suivants :
- un accès conditionnel aux sites partenaires connectés su site d'intermédiation, ce qui contribue à satisfaire l'objectif de protection des mineurs,
- une possibilité technique de réaliser un plafonnement des niveaux de transaction avec les sites, ce qui contribue à une prévention des risques d'addiction de joueurs,
- une capacité de générer un prélèvement sur des mises de jeu, en amont du transfert de ces mises vers les sites en ligne,
- un contrôle opérationnel centralisé au sein du site d'intermédiation, permettant un paramétrage global de l'ensemble des sites partenaires du site d'intermédiation,
- un archivage de l'ensemble des transactions et opérations réalisées via le site d'intermédiation, assurant un haut niveau de traçabilité recherché notamment à des fins de preuve et de lutte contre la fraude.

Dans un premier mode de réalisation correspondant à l'utilisation d'un réseau de sites de distribution, par exemple des débitants de tabac, le procédé de contrôle d'accès selon l'invention comprend :
- en un site de distribution connecté au réseau de communication,
   - une étape pour saisir, en réponse à une demande d'accès à des sites ou contenus émise par une personne requérante et à un filtrage sur l'âge de ladite personne requérante, une information de validation de ladite demande,
   - une étape pour délivrer, après saisie de ladite information de validation, un support de contrôle d'accès comprenant des données de référence unique,
- sur le site d'intermédiation faisant fonction de serveur opérateur desdits sites ou contenus:
   - une étape pour recevoir et traiter lesdites données de référence unique saisies à partir d'un terminal utilisé par ladite personne requérante et connecté audit serveur opérateur, et
   - une étape pour procurer, après traitement, audit requérant un accès à au moins un desdits sites ou contenus depuis ledit terminal.

Les données de référence associées à chaque support sont avantageusement uniques et anonymes.

Lorsqu'il s'agit de contrôler l'accès à des jeux en ligne sur un réseau de communication tel qu'Internet ou un réseau de communication mobile, le procédé selon l'invention comprend en outre, à l'issue d'une session de jeu, une étape pour associer au support de contrôle d'accès, des données sur le(s) gain(s) réalisé(s) pendant ladite session de jeu.

Il peut aussi comprendre une étape pour détruire ou effacer les données de référence et/ou les données de gain associées au support de contrôle d'accès, ainsi que, préalablement au paiement d'un gain, une étape pour accéder à des données de preuve et les confronter à des données actualisées contenues dans ledit support ou associées audit support.

Le support de contrôle d'accès peut être soit de nature matérielle, soit dématérialisé, les données de référence, de crédit et de gain étant stockées dans un site distant connecté via un réseau de communication au site de jeux et à l'opérateur de distribution.

Dans un autre mode de réalisation, l'étape de traitement d'informations personnelles d'un utilisateur requérant un accès à au moins un site en ligne met en oeuvre un procédé pour produire une information représentative de droits d'accès d'une personne à des sites, à des produits, des contenus informatifs ou services, comprenant :
- une étape pour extraire d'une source primaire d'information relative à ladite personne, une information discriminante,
- une étape pour traiter cette information discriminante et produire au moins un marqueur discriminant,
- une étape pour appliquer ledit marqueur discriminant au sein d'un support d'accès, et
- une étape pour générer ladite information représentative de droits d'accès à partir dudit au moins un marqueur et d'une information de filtrage discriminant.

Les marqueurs produits peuvent avantageusement comprendre un marqueur de l'âge de la personne et en ce que l'information de filtrage discriminant comprend une information d'horodatage, et/ou au moins un marqueur d'un événement chronologique en relation avec l'âge de la personne.

Le procédé de contrôle d'accès selon l'invention peut en outre comprendre une étape pour produire au moins un marqueur dit provisoire à partir d'une d'information issue de la source primaire d'information et d'une information d'horodatage, et une étape pour inhiber un marqueur provisoire par péremption préprogrammée en relation avec l'information d'horodatage ou par péremption à une date prédéterminée.

Le procédé de contrôle d'accès selon l'invention peut être mis en oeuvre avec un support d'accès constitué par un numéro de téléphone ou une adresse de courrier électronique d'une personne requérante, ce numéro de téléphone ou cette adresse de courrier électronique étant déterminé à partir d'au moins un marqueur obtenu à partir d'une information en relation avec l'âge de ladite personne requérante extraite d'une source primaire d'information associée à ladite personne requérante.

Un marqueur discriminant au sein d'un support d'accès peut contenir un lien à des informations relatives à la personne requérante qui sont stockées dans une base de données distante.

Suivant encore un autre aspect de l'invention, il est proposé un système pour contrôler l'accès d'un utilisateur d'un terminal à une pluralité de sites en ligne connectés via un réseau de communication, mettant en oeuvre le procédé de contrôle d'accès selon l'une quelconque des revendications précédentes, comprenant un site d'intermédiation entre ledit terminal utilisateur et la pluralité de sites en ligne, ce site d'intermédiation comprenant :
- des moyens pour recevoir d'un terminal utilisateur connecté via ledit réseau de communication audit site d'intermédiation, des informations personnelles relatives à un utilisateur dudit terminal, ces informations personnelles comprenant des informations d'identité,
- des moyens pour traiter lesdites informations personnelles selon au moins un critère discriminant, pour générer des données de certificat numérique sous condition de satisfaction dudit critère discriminant, et pour transmettre lesdites données de certificat numérique audit terminal utilisateur,
- des moyens pour permettre une connexion dudit terminal utilisateur via ledit réseau de communication à au moins un site parmi ladite pluralité de sites en ligne,
- des moyens pour gérer au sein dudit site d'intermédiation un compte attaché audit utilisateur, ce compte intégrant une pluralité de données attachées respectivement à des transactions effectuées entre ledit terminateur utilisateur et le ou lesdits sites connectés parmi ladite pluralité de sites en ligne, et
- des moyens pour traiter les données de transaction intégrées dans ledit compte utilisateur et pour délivrer vers un site tiers connecté via ledit réseau de communication des données de prélèvement issues du traitement desdites données de transaction.

Ce système peut en outre comprendre au moins en au moins un site de distribution connecté au réseau de communication :
- des moyens pour saisir, en réponse à une demande d'accès à des sites ou contenus émise par une personne requérante et à un filtrage sur l'âge de ladite personne requérante, une information de validation de ladite demande,
- des moyens pour délivrer, après saisie de ladite information de validation, un support de contrôle d'accès SP comprenant des données de référence unique,

- sur le site d'intermédiation faisant fonction de serveur opérateur desdits sites ou contenus, connecté au réseau de communication:

- des moyens pour recevoir et traiter lesdites données de référence unique saisies à partir d'un terminal utilisé par ladite personne requérante et connecté audit serveur opérateur, et
- des moyens pour procurer, après traitement, audit requérant un accès à au moins un desdits sites ou contenus depuis ledit terminal.

Le système selon l'invention peut aussi comprendre, au niveau du site de distribution, des moyens pour neutraliser ou effacer les données de référence contenues dans le support.

L'âge constitue une caractéristique consubstantielle de l'identité d'un individu. Dans la vie courante, une date de naissance n'a de sens qu'une fois précisée la personne à laquelle elle se rapporte. C'est la raison pour laquelle l'entité émettrice et gestionnaire de toute source primaire d'information contenant - ou permettant d'accéder à - la date de naissance d'un individu gère donc nécessairement l'identité de ce dernier.

Il existe de nombreuses situations dans lesquelles un contrôle de l'âge d'une personne requérant l'accès à un service doit être effectué. Ce contrôle implique généralement une intervention humaine avec un contrôle visuel d'une pièce d'identité. De tels contrôles sont bien souvent fastidieux autant pour celui ou celle qui l'effectue que celui ou celle qui y est soumis.

Un autre but de la présente invention est de proposer une solution nouvelle à ce problème du contrôle d'accès selon l'âge et plus généralement aux problèmes de contrôle d'accès selon des facteurs discriminants, qui apporte une bien meilleure efficacité et fiabilité que les procédés humains.

Ainsi, dans une version avantageuse de l'invention, le système de contrôle d'accès selon l'invention comprend en outre un système pour produire une information représentative de droits d'accès d'une personne à des sites, des contenus informatifs, à des produits ou services, comprenant :
- des moyens pour extraire d'une source primaire d'information en relation avec ladite personne, une information discriminante, notamment en relation avec l'âge de ladite personne,
- des moyens pour traiter cette information discriminante et produire au moins un marqueur discriminant,
- des moyens pour appliquer ledit marqueur discriminant au sein d'un support d'accès, et
- des moyens de filtrage discriminant prévus pour générer ladite information représentative de droits d'accès à partir dudit au moins un marqueur ainsi appliqué et d'une information de filtrage discriminant.

Suivant toujours un autre aspect de l'invention, il est proposé un support de contrôle d'accès à une pluralité de sites en ligne, mis en oeuvre dans le procédé de contrôle d'accès selon l'invention, caractérisé en ce qu'il est généré par traitement de données personnelles fournies par un utilisateur requérant, sous condition d'au moins un critère discriminant appliqué à au moins une partie desdites données personnelles.

Ce support peut être prévu pour contenir au moins un marqueur discriminant produit à partir d'un traitement d'une information discriminante extraite d'une source primaire d'information en relation avec l'utilisateur requérant.

Il peut être émis sous une forme électronique par le site d'intermédiation après traitement de données personnelles reçues d'un terminal utilisateur.

Pour générer un commencement de preuve, le procédé de contrôle d'accès selon l'invention peut en outre comprendre une étape pour archiver lesdites données actualisées de gain et de crédit associées à des données d'horodatage de l'étape de validation, de façon à constituer des données de preuve,

Il est important de souligner que les supports de transaction mis en oeuvre dans la présente invention ne sont pas nécessairement obtenus par des utilisateurs ou joueurs après paiement. En effet, la présente invention n'est pas limitée aux seuls supports de jeu prépayés. Ainsi, un opérateur pourrait fort bien distribuer des tickets gratuits dans un réseau de distribution qui assurerait le filtrage de l'âge Par exemple, des tickets pourraient être remis par un opérateur de distribution à des utilisateurs à l'occasion de la vente de cigares ou d'alcool.

Le procédé de contrôle d'accès selon l'invention peut aussi avantageusement procurer une traçabilité des opérations. En particulier, il devient possible d'apporter la preuve qu'un distributeur n'a pas opéré le filtrage pour lequel il était mandaté ou qu'un adulte a remis à un mineur un support de contrôle d'accès. La traçabilité ainsi obtenue permet d'effectuer un arbitrage en cas de litige ou de contestation et garantit la bonne foi de l'opérateur de jeu. Par ailleurs, le procédé selon l'invention permet de se prémunir contre les visites incitatives proposées par des sites, ce que ne permet pas la simple utilisation d'une carte de paiement comme moyen de filtrage.

Sont données ci-dessous des définitions de termes et d'expressions énoncées dans les revendications et la description de la présente demande.

On entend ici et dans la suite par ***Opérateur de jeu (OJ),*** une entité (entreprise, association, organisation) utilisatrice du système faisant l'objet du brevet et proposant au moins un jeu en ligne payant sur le marché. L'opérateur de jeu détermine le support attestant du prépaiement. L'opérateur de jeu détermine les moyens de mise en oeuvre de la reconnaissance du prépaiement, de l'ouverture d'une ligne de crédit disponible, la politique tarifaire des jeux et qui assume les décrémentations du crédit au fil du jeu.

On entend par ***Requérant*** toute personne souhaitant disposer d'un support de contrôle d'accès en vue d'accéder à des services, jeux ou contenus.

On entend par ***Détenteur du support* :** tout porteur du support, qui peut être l'acheteur ou toute autre personne. Dans les cas réglementaires qui imposent notamment qu'un joueur soit majeur, le détenteur du support de jeu s'interdit expressément de permettre le jeu à un mineur ou à une personne non autorisée.

On entend par ***Support de contrôle d'accès*** (ou support d'accès):un dispositif technique physique ou virtuel, *au porteur*, qui atteste que celui auquel il a été délivré est majeur et permet du prépaiement (montant et disponible) et qui permet l'exigibilité des gains éventuels.

Une personne ne peut accéder au site que si elle détient un support de contrôle d'accès.

On entend par ***Site d'intermédiation*** ou plate-forme d'intermédiation une structure technique de traitement d'information, connectée à un réseau de communication et interposée, en termes de cinématique des flux d'information, entre d'une part, des terminaux d'utilisateur et, d'autre part, des sites ou serveurs fournissant des services ou des contenus en ligne.

On entend par ***Opérateur de distribution (OD)* :** l'opérateur de distribution est tout réseau distribuant des supports de contrôle d'accès pour le compte de l'opérateur de je et est en charge de garantir le filtrage.

On entend par ***Fiche de jeu :*** un ensemble constitué du récapitulatif de jeu, des conditions générales de ventes (CGV), des conditions particulières de ventes (CPV), des références lues sur le support de jeu, et d'éléments variables indiqués par le joueur. Tant que la fiche jeu n'est pas validée par le joueur, celui-ci est considéré comme n'ayant pas joué.

On entend par ***Fiche de jeu validée par le joueur***, la Fiche de jeu associée à un consentement irrévocable du joueur. Le report d'informations présent sur un support est un exemple. D'autres dispositifs techniques pourraient se substituer en vue d'acter un consentement irrévocable, par exemple un dispositif biométrique, une information aléatoire créée à la volée.

On entend par ***Preuve bilatérale de jeu* :** l'ensemble constitué par le support, le récapitulatif de jeu et la validation du joueur permettant l'établissement d'un consentement irrévocable. Cette preuve bilatérale peut, le cas échéant, faire l'objet d'une transmission à un tiers de confiance en vue de l'établissement d'une date certaine, d'une stabilisation et d'un archivage.

Le procédé de contrôle d'accès selon l'invention permet l'utilisation conjointe d'une part d'un réseau physique de distribution de supports de prépaiement de jeux tels que les bureaux de tabac, bureaux de Poste, agences commerciales, réseaux de grande distribution, casinos, et concomitamment le développement d'un ou plusieurs jeux en ligne.

Il est ainsi possible d'assurer un contrôle de l'atteinte de la majorité légale par les acheteurs du support, en cas de vente par un réseau agréé, lorsque la réglementation l'exige. En conséquence, l'acheteur du support peut être majeur et rester anonyme.

Contrairement aux méthodes déclaratives de contrôle massivement utilisées à ce jour, la présente invention constitue un outil de filtrage sur l'âge. En fait, le procédé de contrôle d'accès selon l'invention pourrait être comparé à un agent de sécurité contrôlant systématiquement les pièces d'identité avant l'entrée dans un casino alors qu'une carte de paiement intervient en fin de cinématique auprès d'un caissier et en aucun cas n'est destiné à la vérification d'identité de son détenteur. En cas de non vérification des conditions de délivrance (notamment des conditions d'âge), le requérant se voit refuser la remise d'un support de contrôle d'accès, avant même toute opération de paiement.

Le procédé de contrôle d'accès selon l'invention permet aussi de garantir l'anonymat des gains, dans les limites de la réglementation des jeux. Le procédé de contrôle d'accès permet la constitution d'une preuve bilatérale de jeu, de prépaiement, de l'acceptation de conditions générales et particulières et de leur bonne application, de l'acquittement de taxes éventuelles, de la date et de l'heure certaine du jeu en ligne, de la distribution d'un gain éventuel.

Le procédé de contrôle d'accès selon l'invention établit un lien certain entre un support de contrôle d'accès qui a permis de donner accès au jeu et les gains obtenus pour ce jeu.

Le procédé selon l'invention repose sur une organisation spécifique des flux d'information et de transaction. En revanche, les dispositifs techniques retenus à chaque étape du processus n'entrent pas dans le brevet et restent du domaine du libre choix de l'opérateur de jeu.

Par exemple, un support physique peut être nécessaire pour attester que le filtrage a été effectué et ainsi permettre l'accès à une plate-forme de jeu en ligne. Il est entendu que le procédé selon l'invention n'est pas limité à une nature de support qui peut être, à titre d'exemples non limitatifs, une carte à gratter, une carte à piste ou à puce, une clé USB, un gencode, un SMS, etc. Ce support de contrôle d'accès peut aussi être virtuel, par exemple sous la forme d'informations stockées dans une banque de données ou un serveur. Cette invention est destinée prioritairement au domaine des jeux d'argent en ligne sur tout réseau de télécommunication tel qu'Internet ou tout réseau de télécommunication mobile, sans toutefois s'y limiter.

La source primaire présentée par le requérant à l'opérateur du procédé selon l'invention peut être de nature régalienne (par exemple une carte nationale d'identité, un passeport ou une carte d'électeur), "péri-régalienne" (par exemple une carte de Sécurité Sociale) ou de la sphère privée (par exemple une carte de paiement ou une carte bancaire, une carte de fidélité ou de transport, une carte d'étudiant). La responsabilité de l'exactitude et la véracité de la date de naissance du requérant, - que cette date soit contenue au sein de la source primaire elle-même ou appréhendée auprès d'une base de données accessible par l'intermédiation de la source primaire mais distincte de celle-ci -, ne peuvent en aucun cas incomber à l'opérateur du procédé selon l'invention.

La date de naissance du requérant obtenue par la source primaire peut présenter tout niveau de précision (notamment, année, mois, jour).

La présente invention adresse tout besoin de détermination automatisée de l'âge et tout besoin de filtrage automatisé selon l'âge, quelque soit leur mode de disponibilité ou d'accessibilité ou de distribution, gratuit ou payant : jeux en ligne, contrôle d'accès et tout cas où un filtrage selon l'âge est pertinent (notamment contenus violents, pornographiques, vente en ligne d'alcool ou de tabac, sites de rencontre, mais également sites d'échanges commerciaux impliquant la capacité juridique d'une personne adulte, etc.).

Elle vise notamment à la protection des mineurs pour tous les domaines, contenus, sites, produits ou services destinés aux adultes et disponibles sur tout réseau de télécommunication tel, notamment, qu'Internet, ou tout réseau de téléphonie mobile. La précision du résultat du calcul de l'âge tel que déterminé par le procédé selon l'invention peut dépendre, d'une part, du type de données disponibles sur la source primaire d'information utilisée par le requérant et de leur niveau de précision, et d'autre part, du niveau de précision du dispositif d'horodatage.

La présente invention repose sur une organisation spécifique des flux permettant la détermination automatisée de l'âge et le filtrage automatisé selon l'âge. La mise en oeuvre du procédé selon l'invention peut être intégrée à tout dispositif technique selon l'usage envisagé : physique (par exemple : borne ou automate) ou virtuel (contrôle d'un âge minimum pour la consultation de site internet, par exemple).

La délivrance des titres ou supports d'accès peut faire l'objet d'une mise en oeuvre par plusieurs types d'opérateurs, notamment au travers d'un réseau physique de distribution dans lequel un requérant peut se rendre (notamment borne ou automate de distribution), soit par tout moyen de télécommunication (notamment Internet ou réseau de téléphonie mobile) permettant au requérant une connexion à distance : vente par correspondance, site Internet ou tout autre moyen. Dans le cas d'une connexion à distance, le requérant accède au procédé selon l'invention par tout dispositif technique (notamment ordinateur, téléphone mobile, organiseur personnel, borne interactive).

Le support d'accès selon l'invention peut être, à titre d'exemple non limitatif, une carte à gratter, carte à piste ou à puce, clé USB, gencode, identifiant et mots passe transmis par SMS (Short Message System), email.

Le dispositif technique permettant la délivrance des titres d'accès peut être totalement autonome (il fonctionne alors comme une borne de service). Il peut également être connecté (directement ou par le biais de tout réseau de télécommunication tel qu'Internet ou un réseau de téléphonie mobile) avec tout terminal permettant la distribution de tout produit ou service à délivrance contrôlée. Dans ce cas, l'utilisation du titre d'accès peut s'effectuer dans l'instant de raison qui suit sa délivrance au requérant.

Le dispositif de délivrance peut également être mis en oeuvre dans un réseau de distribution (réseau de distribution physique ou virtuel) non connecté avec un terminal permettant la distribution de tout produit contenu informatif ou service à délivrance contrôlée, notamment les jeux en ligne sur Internet. Dans cet autre cas, l'utilisation du titre d'accès peut s'effectuer à posteriori.

Ainsi, s'appuyant, d'une part, sur tout dispositif technique permettant l'établissement d'un horodatage et d'autre part, sur la lecture de toute source primaire d'information donnant accès directement ou indirectement à la date de naissance du requérant, le procédé selon l'invention permet de déterminer l'âge du requérant de manière automatisée, et de rendre ainsi possible un filtrage automatisé selon l'âge. Cependant, si l'âge constitue l'un des critères de filtrage possibles, le procédé selon l'invention permet d'effectuer tout filtrage discriminant selon tout critère jugé utile ou pertinent par l'opérateur : par exemple, les critères de détention d'un permis de conduire, de diplômes scolaires ou universitaires, d'acquittement d'un paiement, de détention d'une licence sportive, de fidélité et de consommation dans un enseigne de distribution, etc. peuvent constituer des critères de filtrage discriminants selon la problématique de l'opérateur du procédé selon l'invention. Le filtrage discriminant peut comprendre un unique ou de multiples critères de filtrages. Dans le cas d'un filtrage à critères multiples, ces derniers pourront agir de façon conjointe, alternative ou mixte, selon une combinatoire aboutissant au filtrage jugé pertinent par l'opérateur, qui paramétrera le dispositif de filtrage en conséquence.

Sont fournies ci-après plusieurs définitions importantes pour la compréhension de la présente invention et la clarté de la description qui suit.
***Source primaire d'information* :** tout document lisible de manière automatisée, comportant soit des données identitaires permettant notamment la lecture de la date de naissance du requérant, soit toute information permettant l'accès à une base de données comportant ces renseignements. La source primaire d'information doit être reconnue par l'opérateur du système selon l'invention. L'usage de la source primaire d'information est strictement personnel et limité à son détenteur, le requérant. La source primaire d'information pourra être de nature régalienne (Carte nationale d'Identité, passeport, future carte d'identité électronique), péri-régalienne (par exemple, Carte Vitale) ou issue de la sphère privée (par exemple, Carte de paiement, cartes bancaires, cartes de Fédérations sportives). Par ailleurs, la source primaire d'information pourra adopter toutes formes techniquement envisageables : carte physique au format ISO, code barre, suite numérique, numéro de téléphone, adresse de messagerie électronique, hologramme, piste magnétique, carte SIM, repères optiques ou sonores, éléments biométriques, etc.
***Marqueur* :** repère, physique ou virtuel, assurant la visibilité et la traçabilité d'un état (adulte par exemple) ou d'un évènement, notamment lié à l'âge d'un détenteur. Dans sa version physique, un marqueur peut être optique, sonore ou tout indicateur de type sensoriel. Dans sa version virtuelle, un marqueur peut être un ensemble de données numériques ou alphanumériques.
***Dispositif de lecture* :** tout dispositif permettant la lecture automatisée de la source primaire d'information présentée par le requérant.
***Dispositif d'horodatage* :** tout dispositif technique permettant la détermination de la date et de l'heure à tout moment, c'est à dire permettant l'établissement d'un horodatage. Une option avantageuse du procédé selon l'invention consiste à mettre en oeuvre tout procédé technique permettant la détermination d'un horodatage certain opposable et reconnu, c'est à dire à valeur de preuve juridiquement recevable.
***Unité de calcul* :** tout dispositif technique permettant la détermination de l'âge du requérant. Cette unité de calcul peut être locale (par exemple un programme résidant dans l'unité de lecture) ou distante (un programme sur un serveur) et accessible par tout réseau de télécommunication, notamment mobile ou un réseau tel qu'Internet.
***Jeton d'horodatage* :** matérialisation d'un événement déterminé dans un document unique (physique ou virtuel) mentionnant l'heure et la date à laquelle il a été émis. Le jeton d'horodatage mentionne également une ou plusieurs références dans un but de dénombrement ou de traçabilité. Le jeton d'horodatage peut avantageusement être produit par tout dispositif technique adapté permettant d'attester un horodatage certain, afin notamment de constituer une preuve juridiquement recevable.
***Unité de filtrage* :** tout dispositif technique permettant la réalisation du filtrage selon l'âge tel que souhaité par l'opérateur du procédé selon l'invention. Cette unité de calcul peut être locale (par exemple un programme résidant dans l'unité de lecture) ou distante (un programme sur un serveur) et accessible par tout réseau de télécommunication, notamment mobile ou un réseau tel qu'Internet.
***Unité de délivrance des supports d'accès* :** tout dispositif technique permettant la délivrance de supports d'accès, tel qu'une imprimante, ou un générateur de SMS ou d'email, etc. L'unité de délivrance des supports d'accès pourra avantageusement disposer de tout dispositif permettant le comptage des supports émis. De même, l'unité de délivrance de supports d'accès pourra avantageusement disposer d'un dispositif permettant la génération de numéros d'identification des titres émis, par tout moyen (notamment numéro de série, code à barres, hologrammes, code 2D). L'unité de délivrance des supports d'accès pourra soit générer des titres d'accès soit délivrer des supports d'accès préalablement conçus.
***Âge* :** résultat de la comparaison entre l'horodatage fourni par l'unité d'horodatage et la date issue directement ou indirectement de la source primaire d'information présentée par le requérant. Le degré de précision de l'âge dépend de la précision de la date lue sur la source primaire d'information et de la précision de l'horodatage. Afin de respecter un principe de précaution, une option avantageuse consiste à prendre en compte un âge révolu.
***Filtrage* :** opération de détermination de la légitimité de la délivrance ou de la non délivrance du support d'accès. Le filtrage s'effectue en fonction du paramétrage du système selon l'invention. Le paramétrage doit comporter au moins un critère. Il peut avantageusement comporter des critères différents de l'âge : par exemple, paiement effectué. Selon le paramétrage souhaité par l'opérateur, le filtrage peut s'opérer via un seul et unique critère, mais peut également s'opérer selon plusieurs critères -sans nombre restrictif- .
***Critère (de filtrage)* :** état, qualité ou caractéristique du requérant, nécessaire au filtrage, et par conséquent objet du paramétrage du filtre de l'unité de filtrage. Le choix d'un critère unique ou de critères multiples relève de la libre appréciation de l'opérateur, mais dans certains cas peut se trouver imposé par des dispositions légales.
***Paramétrage* :** définition de tout critère de délivrance du titre d'accès, dont notamment l'âge. Le paramétrage doit également comporter préalablement une phase de définition des sources primaires d'information reconnues comme valides par l'opérateur du système selon l'invention.
***Opérateur* :** Entité mettant en oeuvre le procédé selon l'invention, dans le but de délivrer des titres d'accès à des requérants notamment dans un objectif de filtrage selon l'âge, notamment dans un but de protection des mineurs. Consécutivement à la mise en oeuvre du procédé selon l'invention, l'opérateur peut avantageusement procéder à toute opération de distribution de tout bien ou service, à titre gratuit ou payant.

Les ***Support d'accès*** (ou également titre d'accès) sont des dispositifs techniques physiques ou virtuels, au porteur, c'est à dire strictement personnels une fois attribués, qui permet de faire valoir un droit d'accès à tout dispositif nécessitant de remplir valablement une ou plusieurs conditions, d'âge notamment. Le support d'accès pourra avantageusement être muni d'un dispositif permettant notamment le dénombrement et de tout autre dispositif permettant notamment tout type de référencement (notamment unitaire ou par lots). De même, le titre d'accès pourra également le cas échéant attester d'un prépaiement (montant et disponible)

La détermination de l'âge du requérant, telle que conçue par le procédé selon l'invention, utilise la date naissance directement ou indirectement présente sur la source primaire d'information, lisible automatiquement. Le procédé selon l'invention admet tout type de source primaire d'information, quelle qu'en soit la nature technique : notamment suite numérique, bande magnétique, carte à puce, carte à mémoire, carte à microprocesseur, code barre (Gencode), code 2D, hologramme ou tout autre dispositif permettant la lecture optique, RFID (Radio Frequency Identification Data), numéro de téléphone portable, etc. Le procédé selon l'invention admet également que soit stockée sur la source primaire d'information toute information permettant l'accès à une base de données comportant les renseignements permettant la détermination de l'âge ou de toute autre information nécessaire au filtrage selon le ou les critère(s) retenus par l'opérateur.

La date de naissance peut être un sous-ensemble ou une composante d'un identifiant quelconque fourni par le requérant. On citera en exemple l'utilisation d'un numéro de Sécurité Sociale lisible sur une carte Vitale. Le numéro est du type 1 92 11 75 073 173 73. La lecture des chiffres du 2ème au 5ème rang permettent de déterminer une date de naissance en novembre 1992. Le requérant sollicite un titre d'accès dans la journée du 29 novembre 2008.

Le niveau de précision de cette source primaire d'information n'indique ni le jour ni l'heure de la naissance. Seuls les chiffres du 2ème au 5ème rang sont pris en compte, préservant ainsi l'anonymat du requérant.

Le jeton d'horodatage émis par le dispositif d'horodatage établit la date et l'heure de la requête (par exemple 29 novembre 2008 à 11h34 (ou tout autre niveau de précision). L'unité de calcul établit pour ce requérant l'âge de 17 ans révolus (et non 18 ans), respectant un principe de précaution ci-dessus. En effet, le requérant peut très bien être déjà âgé de 18 ans s'il est né avant le 28 novembre 2008. Dans cet exemple, si le dispositif de délivrance des titres d'accès a été paramétré afin de délivrer des titres d'accès aux majeurs, la délivrance n'aura pas lieu.

Le filtrage selon l'âge effectué par la mise en oeuvre du procédé selon l'invention reste anonyme. Il n'est pas nécessaire de procéder à une lecture intégrale des données d'identité du requérant. L'archivage des données lues n'est pas non plus nécessaire à la mise en oeuvre du procédé selon l'invention. Cependant, la vérification d'identité, si elle est techniquement permise par la source primaire d'information présentée par le requérant, peut constituer une option avantageuse. Ainsi, le procédé selon l'invention permet-il de déterminer avec certitude l'âge du requérant dans un objectif notamment de filtrage selon l'âge, pour s'assurer notamment de la majorité du requérant.

Grâce à la mise en oeuvre d'une plateforme d'intermédiation selon l'invention, une protection des mineurs efficace est assurée : un joueur de moins de 18 ans ne peut avoir accès au sites de jeux d'argent en ligne.

De plus, une prévention des risque d'addiction est assurée par le plafonnement du montant global que le joueur peut engager et par le plafonnement du montant de chaque mise.

Il est à noter qu'au même titre que dans la vie réelle, un joueur en situation addictive peut obtenir « de se faire interdire l'accès au casino », il en va de même via la cinématique envisagée.

Par ailleurs, le recouvrement fiscal est garanti, quel que soit le lieu d'implantation des serveurs des opérateurs de jeux en ligne.

Le contrôle opérationnel étant centralisé, la globalité du système se trouve adaptable, parce que paramétrable à tout moment (évolution du taux de prélèvement fiscal, évolution du plafonnements des mises...)

En outre, une prévention efficace contre le fraude et le blanchiment d'argent est assurée : toutes le transactions peuvent être tracées et archivées à fin de preuve.

### DESCRIPTION DES FIGURES

D'autres avantages et caractéristiques de l'invention apparaîtront à l'examen de la description détaillée d'un mode de mise en oeuvre nullement limitatif, et des dessins annexés sur lesquels :
- la figure 1 illustre le processus initial d'activation d'un support de contrôle d'accès mis en oeuvre dans le procédé selon l'invention ;
- la figure 2 est une vue synoptique d'un système de contrôle d'accès à des jeux en ligne selon l'invention ;
- la figure 3 illustre une étape préalable à la mise en oeuvre du procédé de contrôle d'accès selon l'invention ;
- la figure 4 illustre une première étape du procédé de contrôle d'accès selon l'invention ;
- la figure 5 illustre une seconde étape du procédé de contrôle d'accès selon l'invention ;
- la figure 6 illustre une troisième étape du procédé de contrôle d'accès selon l'invention.
- la figure 7A est un schéma synoptique d'un premier mode d'implémentation du procédé selon l'invention, mettant en oeuvre des documents identitaires incluant une information sur la date de naissance du détenteur ;
- La figure 7B est un schéma synoptique d'un second mode d'implémentation du procédé selon l'invention, mettant en oeuvre une carte de paiement ;
- la figure 8 illustre un exemple de cinématique des flux d'information lorsque le procédé selon l'invention est mise en oeuvre ;
- la figure 9 illustre une implémentation de plusieurs options du procédé selon l'invention ;
- la figure 10 illustre un exemple particulier de mise en oeuvre du procédé selon l'invention dans un distributeur de produits ; et
- La figure 11 illustre un exemple d'utilisation d'une plateforme d'intermédiation selon l'invention permettant à un joueur d'accéder à une pluralité de serveurs de jeu en ligne.

### DESCRIPTION DETAILLEE DE MODES DE REALISATION

### 1^{er} mode de réalisation

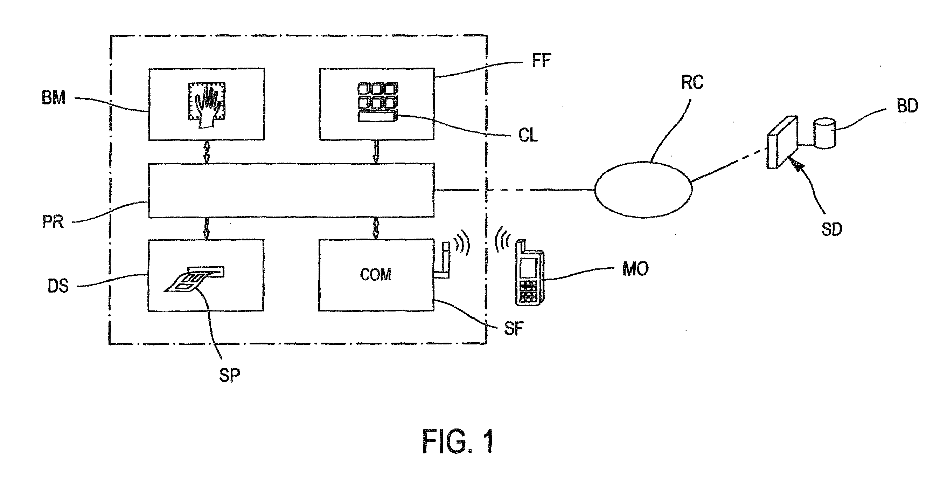

On va tout d'abord décrire, en référence à la figure 1, un dispositif OD de filtrage et de fourniture de supports de contrôle d'accès, dans un site d'un opérateur de distribution. Ce site de distribution est accessible à des personnes requérantes souhaitant accéder à des services ou contenus soumis à un contrôle d'accès. Ce dispositif de filtrage et de fourniture OD peut comprendre tout ou partie des équipements suivants :
- un équipement de biométrie BM, qui peut être connecté via un processeur PR et un réseau de communication RC, - notamment Internet et/ou un réseau de communication mobile -, à un serveur de distribution SD et une banque de données BD, cet équipement de biométrie étant conçu pour déterminer si une personne requérante remplit les conditions d'âge requises pour accéder aux services ou contenus concernés,
- un équipement FF de saisie d'une information de filtrage d'âge par un opérateur après s'être assuré de l'âge d'une personne requérante,
- un équipement DS pour délivrer des supports de contrôle d'accès SP, tel qu'une imprimante dédiée, qui peut être connecté via le processeur PR et un réseau de communication au serveur de distribution SD,
- un équipement SF pour transmettre, après filtrage, par voie non filaire, par exemple du Wifi, des données de support de contrôle d'accès à un appareil portable MO détenu par une personne requérante.

Lorsqu'une personne requérante vient sur un site de distribution OD, avec pour intention d'obtenir un support de jeu SP, deux options peuvent être envisagées :
- dans une option totalement automatisée, la personne requérante présente sa main ou son oeil devant l'équipement de biométrie BM,
- dans une option semi-automatique, la personne requérante se présente face à une personne habilitée, par exemple le gérant ou l'employé d'un site de distribution, qui s'assure de l'âge de la personne requérante - au besoin en lui demandant de présenter une pièce d'identité - puis saisit sur un clavier CL d'un équipement de saisie FF une information de validation de la demande et d'activation de l'équipement DS de délivrance d'un support de contrôle d'accès SP ou de l'équipement de transmission sans fil SF.

Il est important de souligner que en cas de non vérification des conditions de délivrance (notamment des conditions d'âge) que ce soit dans la configuration automatisée ou dans la configuration semi-automatique, le requérant se voit refuser la remise d'un support de contrôle d'accès, avant même qu'une opération de transaction ou de paiement ait pu avoir lieu.

Si la personne requérante souhaite se voir remettre un support matériel de contrôle d'accès SP, c'est l'équipement de fourniture DS qui sera activé par l'opérateur ou de manière automatique sur instruction de l'équipement de biométrie BM. Mais cette personne requérante peut aussi opter pour une transmission sous forme dématérialisée des données de contrôle d'accès dans la mémoire de son mobile MO.

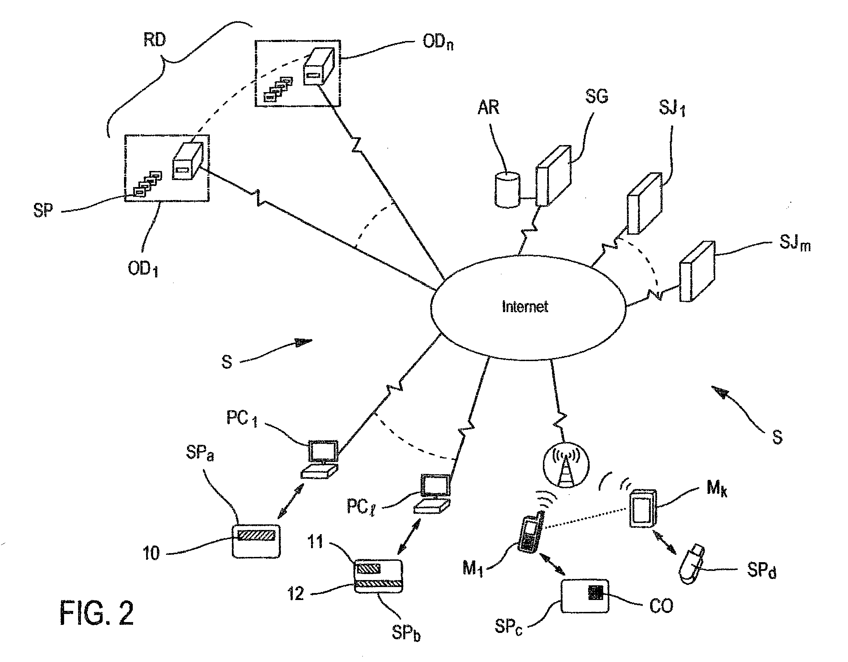

On va tout maintenant décrire, en référence à la figure 2, un exemple d'architecture d'un système de contrôle d'accès à des jeux en ligne selon l'invention. Un tel système S est construit autour des éléments suivants :
- un ensemble de terminaux de transaction OD1,..., ODn installés dans des sites d'un opérateur de distribution organisé sous la forme d'un réseau de sites RD,
- Un réseau de communication tel qu'Internet ou un réseau de communication mobile, auquel sont connectés :
   - un serveur de contrôle d'accès SG doté de moyens d'archivage AR,
   - un ou plusieurs serveurs opérateurs de jeux en ligne SJ1,...SJm,
   - des équipements de communication fixes PC1,...PCl ou mobiles M1,...Mk, utilisés par des joueurs,
- des supports de jeu prépayés SP ;SPa...SPd acquis par les joueurs dans les sites de l'opérateur de distribution, et contenant des données de référence, et optionnellement de crédit et/ou de gains.

Ces supports de jeu peuvent être soit sous forme matérielle telle que des tickets SPa comportant une zone de grattage 10 mais ne comportant aucun moyen mémoire, des cartes SPb pourvues d'une piste magnétique 12 et d'une zone de grattage 11 , des cartes SPc comprenant un code optique CO, des supports SPd réutilisables du type clés USB ou autre dispositif portable, soit sous forme virtuelle telle qu'un identifiant enregistré dans un téléphone portable ou un assistant personnel et associé à un compte virtuel ouvert auprès d'un site opérateur.

On va maintenant décrire, en référence aux figures précitées, un exemple pratique de mise en oeuvre du procédé de contrôle d'accès selon l'invention, pour le contrôle de l'accès à des jeux en ligne.

On peut distinguer quatre phases principales dans les transferts de flux.

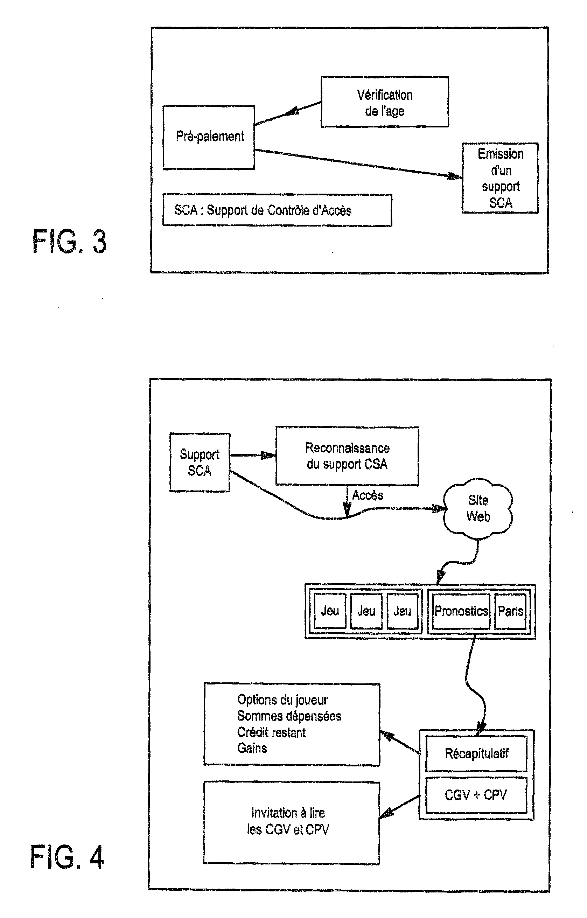

En référence à la figure 3, lors de la demande d'obtention du support, un support de jeu SP est remis au joueur par le distributeur OD. Le distributeur s'assure du respect des contraintes réglementaires éventuelles, notamment l'âge... Le distributeur procède à des vérifications réglementaires éventuelles (notamment, âge supérieur à 18 ans). Il lui est remis un support SP de contrôle d'accès au jeu comportant une référence. Le joueur s'acquitte du prépaiement. Cette vérification peut être entièrement automatisée, notamment au moyen de système biométriques reliés à une banque de données.

Un tel support de contrôle d'accès pourrait par exemple du type de celui divulgué dans le document WO 04/079641 qui décrit un procédé de stockage de données de capacité dans une carte qui est munie d'une section de circuit fusible réalisée au moyen d'une technique d'impression et qui est prévue pour contenir des informations immuables et non copiables.

On peut aussi envisager une technologie de prépaiement du type de celle divulgué dans le document EP 1274025A1 qui décrit un système pour l'échange de données incluant un terminal acceptant des données d'entrée d'un nombre gratté d'une carte prépayée.

Les cartes prépayées mises en oeuvre dans le procédé de contrôle d'accès selon l'invention peuvent intégrer une technologie de sécurisation et d'authentification du type de celle divulguée dans le document WO 02/06059 qui décrit l'utilisation de bandes d'hologramme.

Dans une première étape du procédé de contrôle selon l'invention, en référence à la figure 4, la reconnaissance du support de jeu s'effectue soit de manière automatisée soit par le report volontaire sur le site de jeu d'une référence lue sur le support. Le jeu peut avoir lieu à deux conditions : le support est reconnu comme valide par le système de jeu et d'autre part, le crédit de jeu est suffisant.

La reconnaissance du support de prépaiement et la vérification des crédits disponibles permettent l'accès aux jeux et la consommation des crédits de jeux. Le support remis au joueur comporte une référence unique. Une fois le support reconnu, le joueur accède à un ou plusieurs jeux.

A l'issue de chaque session de jeu, l'opérateur présente un récapitulatif au joueur : options du joueur (pari, score, pronostics, etc.), sommes dépensées, crédit restant et gains éventuels (en nature ou pécuniaires). Les conditions générales de vente (CGV) et conditions particulières de vente (CPV) sont également présentées au joueur. Le joueur est invité à lire attentivement le document présenté, et à compléter ou modifier les paramètres variables. Il est averti que sa validation sera irrévocable et notamment qu'il accepte les conditions générales et particulières de vente.

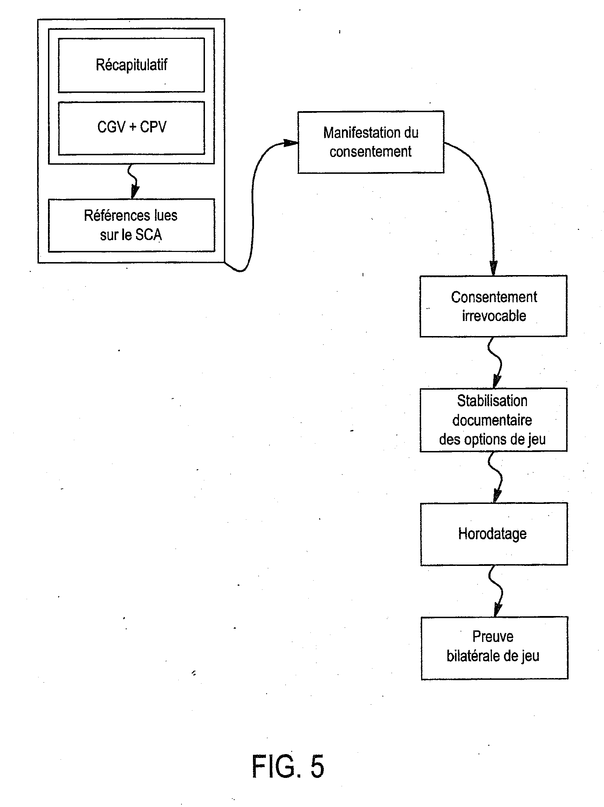

En référence à la figure 5, le joueur manifeste son consentement par le report sur le récapitulatif des références présentes sur le support et par le clic sur une zone de validation. Son consentement est valide parce qu'il est majeur. Le joueur a consenti aux CGV et CPV, au paiement du montant exigé par l'opérateur, et consent à considérer comme irrévocables les options de jeux auxquels il a participé.

Le consentement irrévocable du joueur peut conduire à une stabilisation documentaire des options de jeux. Le document issu du consentement irrévocable constitue une preuve de jeu. Un horodatage est ensuite réalisé et la preuve bilatérale de jeu est constituée à l'issue de toutes ces opérations.

Outre leur caractère optionnel, ces étapes de stabilisation et d'archivage, peuvent être sous-traitées par l'opérateur de jeu à des prestataires spécialisés.

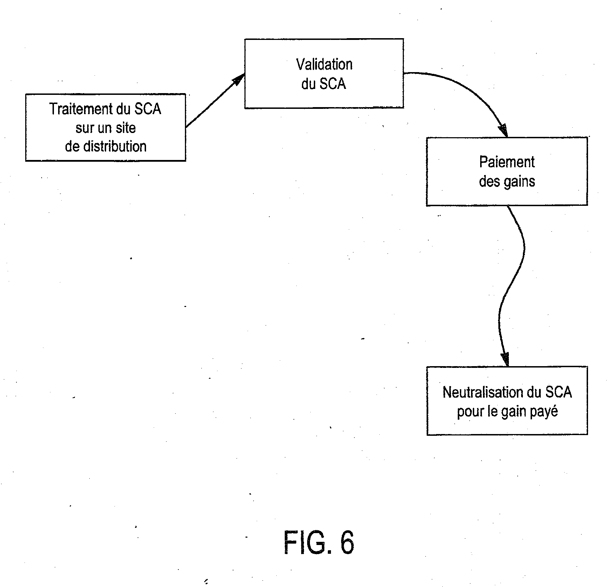

En référence à la figure 6, en cas de gain, le joueur retourne dans un point de vente muni de son support "gagnant" afin de percevoir ses gains. Au moyen du support présenté par le joueur, le distributeur des gains valide la demande de perception. Le support est ensuite « brûlé » ou neutralisé de façon à ne plus être utilisé pour percevoir des gains.

L'opérateur pourra choisir de conserver les preuves de jeu ou tout élément permettant la reconstitution fidèle de la preuve. Il convient que l'opérateur de jeu mette en oeuvre le système d'information permettant au distributeur de s'assurer des gains du joueur en vue de leur paiement. De plus, l'opérateur de jeu prendra toute mesure technique nécessaire à la consultation des preuves de jeu par le joueur. Le système d'information mis en oeuvre permettra également de conserver et de consulter les preuves de paiement de l'intégralité des gains dus aux joueurs.

En cas de litige et de contestation par le joueur (montant ou nature), la preuve bilatérale de jeu qui fait foi. En cas d'absence de preuve contrôlable de jeu, les conditions générales de vente (CGV) font foi.

### Second mode de réalisation

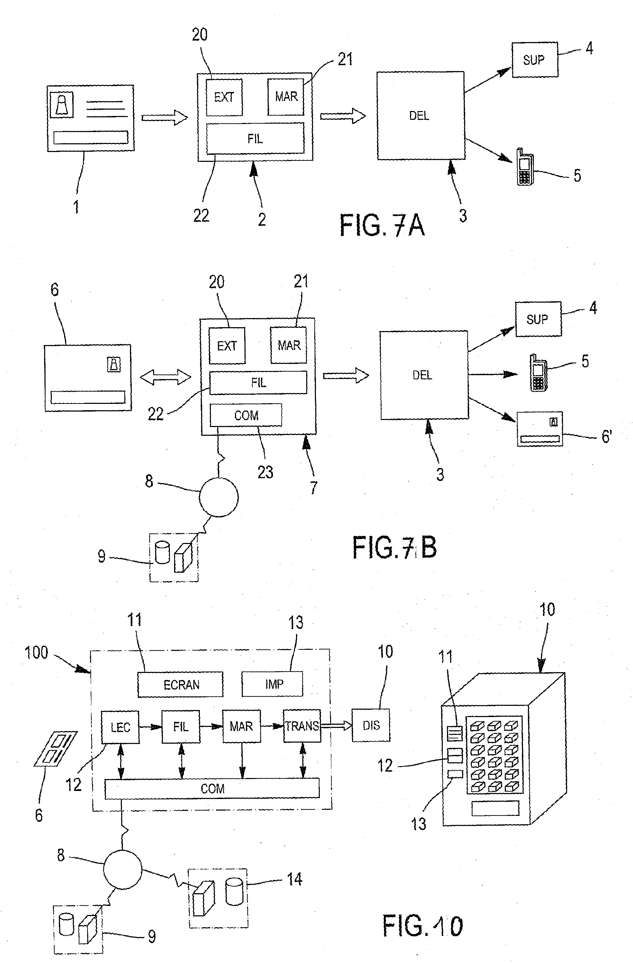

On va maintenant décrire, en référence à la figure 7A, un premier exemple de mise en oeuvre du procédé de production d'information de droits d'accès selon l'invention, configuré pour traiter des documents identitaires en tant que sources primaires d'information. Dans ce premier exemple, un système de production 2 comprend :
- un module extracteur 20 prévu pour lire sur un document identitaire 1 - par exemple une carte d'identité -, des informations liées à la date de naissance du détenteur de ce document et en extraire une information liée à l'âge,
- un module de filtrage 22 équipé de moyens d'horodatage et prévu pour traiter l'information extraite au regard d'un critère discriminant relatif à un âge minimum ou à une tranche d'âge autorisée, et
- un module de marquage 21 prévu pour générer un ou plusieurs marqueurs illustrant un état du détenteur et des droits d'accès qui lui sont attribués.

Ce système de production 2 est connecté à une unité 3 de délivrance de supports d'accès qui peuvent être soit physiques, tels que des tickets 4 qui peuvent être pré-imprimés ou imprimés de manière personnalisée, soit immatériels ou virtuels, par exemple sous la forme d'un numéro de téléphone associé à un équipement de téléphonie 5.

Dans un second exemple de mise en oeuvre illustré par la figure 7B, un système de production d'informations de droits d'accès 7 est conçu pour traiter des informations contenues dans une carte de paiement 6. Ce système de production comprend un module 20 d'extraction d'informations sur l'identité et les références bancaires du détenteur, coopérant avec un module 23 de communication relié via un réseau de communication 8 à un serveur d'informations personnelles 9, pour obtenir de ce serveur 9 des informations représentatives de la date de naissance ou de l'âge de ce détenteur. Le système de production 7 comprend aussi un module de filtrage 22 pourvu de moyens d'horodatage et prévu appliquer un ou plusieurs critères de filtrage discriminant sur les informations obtenues du serveur distant, et un module 21 de génération de marqueurs qui peuvent optionnellement être inscrits dans la carte de paiement 6' elle-même ou bien sur un support d'accès via un dispositif 3 de délivrance de tels supports d'accès qui peuvent être soit physiques sous la forme de tickets ou de jetons 4, soit immatériels par exemple, sous la forme de numéros de téléphone discriminants 5.

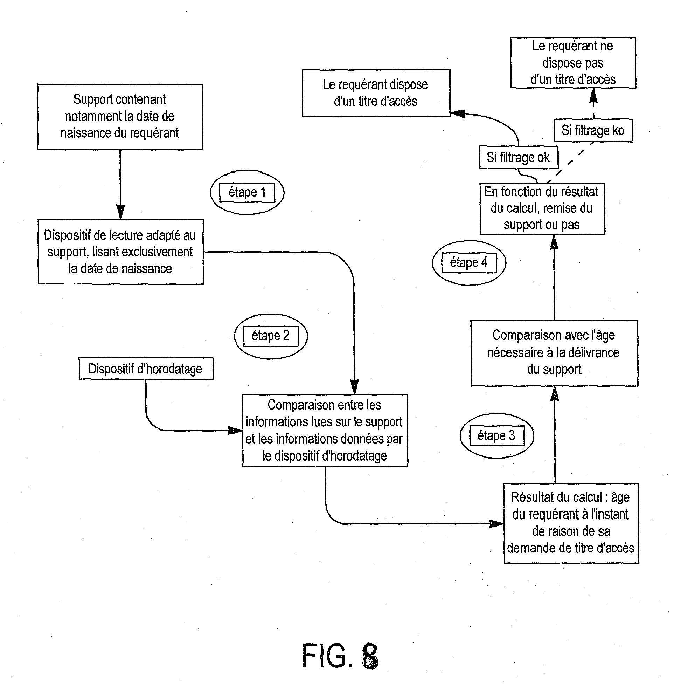

On va maintenant décrire de façon détaillée, en référence à la figure 8, une cinématique des flux d'information rencontrée lors de l'exploitation du procédé de production d'informations de droits d'accès selon l'invention.

Dans une étape préalable, antérieurement à la mise en oeuvre du système selon l'invention, l'opérateur du système doit procéder au paramétrage de celui-ci en entrant dans le système les paramètres qui permettront le filtrage : types de source primaire d'informations acceptés, critères de filtrage et tout paramètre qui pourrait s'avérer utile ou nécessaire. Ainsi, en fonction de sa destination, le dispositif technique doit être programmé afin de délivrer validement des titres d'accès, notamment si le requérant est majeur (âge>18ans), et de procéder à toute autre opération technique permettant la mise en oeuvre du dispositif de filtrage selon l'âge.

La mise en oeuvre du procédé selon l'invention n'affranchit pas l'opérateur du dispositif de toute précaution légale ou administrative concernant le traitement automatisé de données personnelles, si cela se révèle nécessaire.

Dans une étape 1, une source primaire d'information contenant directement ou indirectement une information sur la date de naissance d'une personne requérante est lue par un dispositif de lecture adapté à cette source primaire d'information qui en extrait directement (à partir de la source elle-même) ou indirectement (à partir d'une base de donnée distante dont l'accès est permis grâce à la source) l'information de date de naissance du requérant.

Le requérant présente comme il convient à un dispositif technique adapté à la lecture, une source primaire d'information contenant des données permettant l'établissement direct ou indirect de sa date de naissance. Au cas où les informations contenues dans la source primaire d'information mentionnent des données autres que celles contenant la date de naissance du requérant, le dispositif technique est expressément conçu de manière à ne lire uniquement que les données permettant la détermination de l'âge, afin de pouvoir préserver le cas échéant l'anonymat du requérant.

Dans une étape 2, une comparaison est effectuée entre les informations de date de naissance obtenues via la source primaire d'information et des informations délivrées par un dispositif d'horodatage.

La date de naissance obtenue directement ou indirectement via la source primaire d'information est comparée avec la date instantanée, fournie par tout dispositif d'horodatage. Cette comparaison permet la détermination de l'âge du requérant. Ce dispositif d'horodatage peut être lié physiquement au dispositif de lecture de la source primaire d'information ou non. Dans ce cas, le dispositif d'horodatage peut être consulté à distance depuis le dispositif technique qui opérera la comparaison (par exemple un ordinateur ou un téléphone mobile). Un dispositif d'horodatage distant peut être accessible par tout moyen, notamment tout réseau de télécommunication tel qu'Internet ou un réseau de téléphonie mobile.

Le résultat de cette comparaison qui correspond à l'âge de la personne requérante (étape 3) est ensuite comparé avec l'information sur l'âge nécessaire pour la délivrance du source primaire d'information d'accès au site ou au produit recherché. Dans l'étape 4 qui suit, un filtrage est réalisé en fonction du résultat de ce second calcul de comparaison. Si le filtrage conduit à une autorisation d'accès, le système de production va alors transmettre à un dispositif de délivrance des instructions d'émission d'un support d'accès. A l'inverse, si le filtrage conduit à un refus d'accès, le dispositif de délivrance de support d'accès ne sera pas activé et une information de non recevabilité est alors transmise au requérant. Cette information peut se revêtir toute forme (remise de support physique ou virtuel) de message.

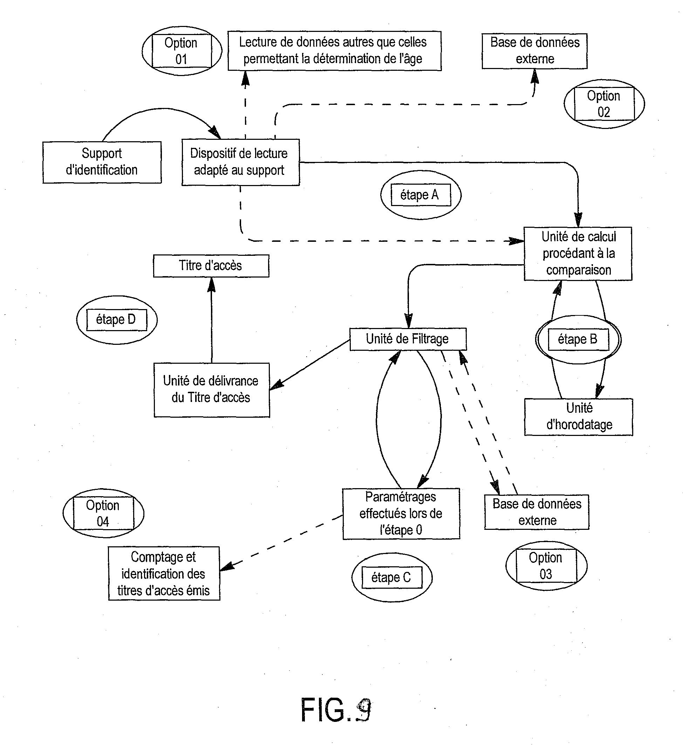

On va maintenant décrire, en référence à la figure 9, plusieurs options de cinématique des flux d'information dans un procédé de production d'informations de droits d'accès selon l'invention.

Ainsi, dans une première option 01, un dispositif de lecture est adapté à une source primaire d'information d'identification (par exemple une carte de paiement) qui ne contient pas d'information sur l'âge du détenteur de cette source primaire d'information. Ce dispositif lit donc des informations personnelles et/ou de référence bancaire qui peuvent permettre (option 02) d'accéder à une base de données externe contenant elle des informations sur la date de naissance du détenteur requérant. Il peut être procédé à la lecture de toute autre donnée également présente sur le source primaire d'information présenté par le requérant, notamment dans un objectif d'identification ou de traçabilité ou de tout autre besoin, notamment de sécurité. En une option 02, les données présentes sur la source primaire d'information permettent la lecture d'informations dans une base de données externe.

Dans une étape A, le dispositif de lecture transmet les informations issues de la source primaire d'information et/ou reçues de la base de données externe, notamment des informations de traçabilité, à une unité de calcul qui procède alors (étape B) à une comparaison avec des informations reçues d'une unité d'horodatage.

Le séquençage de l'étape B est le suivant :
- 1. L'unité de calcul dispose de la date à laquelle s'effectue le calcul de l'âge. Cette date est fournie par un dispositif d'horodatage local ou distant, transmise à l'unité de calcul, matérialisée par un jeton d'horodatage ;
- 2. L'unité de calcul prend en compte la date de naissance du requérant ;
- 3. L'unité de calcul procède à la comparaison entre les deux dates et procède à la détermination de l'âge du requérant.
- 4. L'unité de calcul transmet le résultat à l'unité de filtrage.

La transmission de l'âge du requérant à l'unité de filtrage peut être automatisée. Dans le cas spécifique où le critère de filtrage d'âge est la majorité du requérant, la consultation automatisée d'une base de données dont les sources primaires d'informations sont exclusivement constituées de requérants majeurs (par exemple base de données de permis de conduire) dispense de la présente étape B. L'unité de calcul peut aussi tenir le résultat à disposition de tout dispositif de filtrage. Par exemple dans le cas où la source primaire d'information est issue d'un fichier de nature informatique contenant une signature électronique.

L'unité de filtrage, préalablement paramétrée, va traiter l'information d'âge reçue de l'unité de calcul, au regard de critères discriminants et commander, en cas de satisfaction de ces critères, une unité de délivrance de titres ou supports d'accès qui va générer un support physique ou virtuel (étape D).

L'unité de délivrance des titres d'accès dispose ainsi de l'information transmise par l'unité de filtrage. Deux possibilités se présentent :
- (a) l'un au moins des critères transmis par l'unité de filtrage rend impossible la délivrance d'un titre d'accès. L'unité de délivrance des titres d'accès informe alors le requérant par tout moyen,
- (b) l'intégralité des critères transmis par l'unité de filtrage conduit nécessairement à la délivrance d'un titre d'accès. L'unité de délivrance des titres d'accès délivre alors un titre d'accès.

Dans une version optionnelle (03), on peut prévoir que l'unité de filtrage puisse être en relation avec une base de données externe notamment pour recevoir des informations de filtrage actualisées. Dans une autre version optionnelle (04), l'unité de filtrage est agencée pour commander un comptage et une identification des titres ou supports d'accès émis (étape C).

L'unité de filtrage procède à la comparaison entre l'âge résultant de l'étape B et le critère de filtrage entré lors du paramétrage. Le séquençage de l'étape C est le suivant :
- 1. L'unité de filtrage dispose de l'âge déterminé à l'étape B ;
- 2. L'unité de filtrage dispose d'un critère de filtrage entré lors de l'étape 0 ;
- 3. L'unité de filtrage procède à la comparaison entre les deux données et détermine si l'âge du requérant est conforme aux critères dont il dispose.

En fonction du résultat, deux possibilités se présentent :
(a) L'âge du requérant ne permet pas la délivrance d'un titre d'accès : l'unité de filtrage en informe l'unité de délivrance des titres d'accès par tout moyen ;
(b) l'âge du requérant permet la délivrance d'un titre d'accès : l'unité de filtrage informe l'unité de délivrance des titres d'accès que le critère d'âge est rempli.

Il est à noter que les deux options 03 (accès à une base de données externe) et 04 (comptage des supports d'accès) peuvent être combinées.

Le dispositif de lecture présente deux caractéristiques :
- Il doit être adapté à la nature de la source primaire d'information à lire,
- il n'est pas nécessairement physique.

Si la source primaire d'information comportant les données à lire est virtuelle, le lecteur peut lui aussi être virtuel.

Une application première du procédé selon l'invention est de déterminer automatiquement l'âge dans un objectif de filtrage selon l'âge, pour permettre notamment le jeu en ligne sur Internet. Nous décrivons ici des options avantageuses de mise en oeuvre du procédé selon l'invention.

Le procédé selon l'invention garantit le contrôle selon l'âge tout en préservant l'anonymat des requérants. Une mise en oeuvre avantageuse consiste à assurer également une traçabilité des flux, en utilisant notamment les éléments suivants:
- une référence unique de la source primaire d'information ;
- une référence unique d'un jeton d'horodatage ;
- une référence unique du lecteur de la source primaire d'information ;
- une référence unique du titre d'accès délivré à l'issue du filtrage ;
- toute autre référence unique qui se révélerait utile à la mise en oeuvre d'un archivage efficace.

Le procédé selon l'invention permet notamment une identification en présence de requêtes judiciaires, une fonctionnalité de « black listage » (mise sur liste noire) pour lutter contre les addictions, ainsi qu'une fonctionnalité de limitation du montant des prépaiements qui peut proposer les limites suivantes :
- limite donnée par l'opérateur de jeu : démarche préventive,
- limite donnée par le requérant : autolimitation,
- limite imposée sur décision de justice.

Une option avantageuse du procédé selon l'invention peut mettre en oeuvre tout procédé technique permettant, d'une part, la détermination d'un horodatage certain et d'autre part, la lecture de tout type de source primaire d'information permettant d'accéder directement ou indirectement à une date de naissance certaine (Notamment les sources primaires d'informations d'identité relevant de la sphère régalienne).

Le procédé selon l'invention ainsi mis en oeuvre peut de la sorte permettre la détermination de l'âge certain du requérant.

L'archivage des références susmentionnées lors de chaque opération de filtrage, tout en garantissant l'anonymat du requérant, est de nature à lever ou éviter d'éventuels litiges. De même, les informations archivées pourront être tenues à la disposition des autorités compétentes, sur requête respectant les règles de procédure en vigueur.

On peut aussi prévoir une mise en oeuvre du procédé selon l'invention pour un appareil de distribution automatique de produits, en référence à la figure 10.

Dans cette configuration, un appareil de distribution 10 est équipé d'un système de contrôle et de traitement 100 incluant :
- une unité de lecture 12 prévue pour lire une source primaire d'information identitaire ou une carte de paiement 6, accessible sur la face avant de l'appareil distributeur,
- une unité de filtrage d'informations extraites par l'unité de lecture, pourvue de moyens d'horodatage,
- une unité de production de marqueur(s) discriminants(s) traitant les informations de filtrage fournies par l'unité de filtrage,
- une unité de transaction agencée pour réaliser le paiement d'un produit disponible dans l'appareil distributeur et sélectionné par une personne requérante, l'activation de cette unité de transaction étant contrôlée par les unités de filtrage et de marqueurs et déclenchant un ordre de distribution du produit sélectionné si la transaction de paiement a réussi,
- une unité de communication via un réseau de communication 8 avec un serveur de base de données personnelles 9 et avec un serveur de paiement sécurisé 14, un écran 11 et une imprimante 13 de reçus ou de supports d'accès, accessibles sur la face avant de l'appareil distributeur 10.

### Troisième mode de réalisation

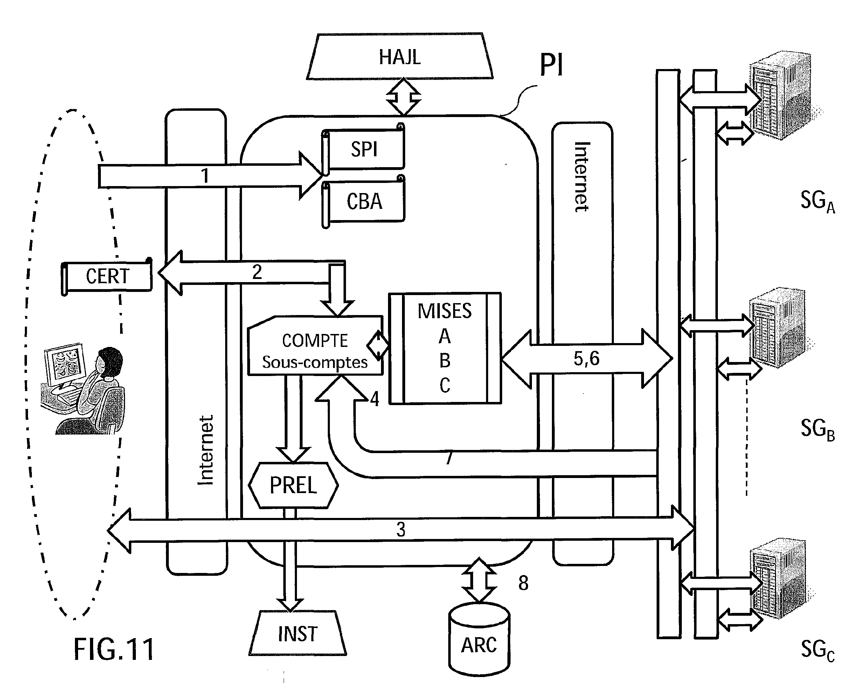

On va maintenant décrire, en référence à la figure 11, un exemple de cinématique de traitement d'information mettant en oeuvre le procédé de contrôle d'accès selon l'invention.

Une plateforme d'intermédiation PI assure les échanges entre d'une part des utilisateurs de terminaux et d'autre part des sites de jeux en ligne SG_{A}, SG_{B},...SG_{C}, via le réseau Internet. Cette plateforme d'intermédiation PI communique aussi avec une entité de régulation de jeux d'argent en ligne, par exemple une Haute Autorité de jeux d'argent en ligne HAJL, et avec une entité institutionnelle INST telle que par exemple une institution fiscale.

La plateforme PI est agencée pour réaliser les fonctions suivantes :
- gérer les identités et droits d'accès, notamment avec une vérification de la majorité et de la non-interdiction de jeu,
- gérer des comptes et sous-comptes dédiés à des mises de jeu, avec une possibilité de plafonner chaque mise et des mises globales, par exemple par semaine ou par mois,
- agir comme chambre de compensation, en assurant une ventilation des mises destinées à chaque opérateur, conformément aux choix de jeu de chaque joueur,
- Effectuer sur chaque compte de joueur une opération de prélèvement dédiée par exemple au recouvrement fiscal, en amont du règlement des mises aux opérateurs,
- Contrôler le respect par les sites en ligne de règles prédéterminée, notamment de sécurité.

Dans une première étape 1, un requérant fait parvenir par tout moyen un support attestant de son identité, par exemple un support régalien tel qu'une carte nationale d'identité, et notamment de sa date de naissance, à la plateforme d'intermédiation PI qui gère les bases de données des identités des requérants pour le compte d'un ou de plusieurs sites marchands ou opérateurs de jeux en ligne.

L'étape 1 comprend aussi le transfert de données d'identité bancaire du joueur requérant (RIB, carte bleu, Visa, MasterCard...), accompagné d'une autorisation de prélèvement/débit (par exemple un montant d'un prélèvement limité mensuellement), permettant outre le prélèvement, la création pour chaque requérant d'un « sous-compte » géré par la plateforme d'intermédiation PI.

Le filtrage selon l'âge du requérant et la création d'un sous-compte à son profit permettent, notamment par un simple paramétrage et un plafonnement des autorisations de débits du sous-compte :
- de limiter le montant de chaque opération (montant limité pour un achat d'un bien ou service, ou pour une mise dans le cas de la participation du requérant à un jeu d'argent en ligne),
- de limiter la globalité des montants dépensés à diverses reprises et auprès des divers opérateurs au cours du mois. Ainsi, dans le cas des jeux en ligne notamment, le risque d'addiction d'un requérant-joueur est maîtrisé, et le cas échéant, il est même possible à tout moment d'interdire l'accès aux jeux de l'ensemble des opérateurs par la mise à zéro du montant disponible sur le sous-compte » ;
- de garantir que le joueur est majeur (plus de 18 ans)
- à un opérateur de créditer le sous-compte au motif de remboursement de l'achat d'un produit défectueux, ou de règlement des gains éventuels dus par un opérateur de jeux d'argent en ligne au requérant-joueur.
- à l'Administration fiscale de prélever le cas échéant les sommes qui lui sont dues. De manière avantageuse, les prélèvements fiscaux peuvent avoir lieu de façon préalable au transfert des achats ou des mises, afin d'éviter la problématique de recouvrement fiscal auprès des opérateurs, vis à vis notamment de ceux qui sont installés à l'étranger ;
- à un requérant-joueur d'accéder via un compte unique à tous les sites marchands ou sites de jeux reconnaissant la plateforme d'intermédiation.

Dans une seconde étape, après saisie et traitement automatisés ou semi-automatiques des informations fournies par le requérant à la plateforme d'intermédiation PI, celle-ci produit un identifiant qu'elle fait parvenir au requérant, identifiant indispensable à ce dernier pour accéder au site marchand ou au site de jeu.

Une option avantageuse consiste en la production et l'envoi d'un identifiant numérique réalisé sous la forme d'un certificat électronique, sécurisé notamment, dont la durée d'usage se trouve nécessairement limitée. Dans ce cas, la plateforme PI pourra soit décider d'être elle-même l'Autorité de Certification (entité gestionnaires techniques des certificats) et/ou l'Autorité de Gestions des preuves (entité gestionnaire des traces des flux : preuves d'achats, preuves de mises, de jeux, de gains éventuels dans le cas de sites de jeux en ligne, etc.), soit décider de sous-traiter ces opérations.

On peut aussi prévoir l'anonymat du requérant, par la création d'un format de certificat spécifique à la plateforme d'intermédiation PI, conjointement reconnus par ladite plateforme et l'ensemble des opérateurs pour le compte desquels elle fonctionne. Ainsi le nom du client ou du joueur n'apparaît-il pas aux yeux des opérateurs, mais, à réception d'un certificat valide, tous les opérateurs disposent de l'assurance que le client-joueur répond aux critères exigés pour jouer.

Le procédé de contrôle d'accès selon l'invention peut aussi inclure la délivrance au requérant-joueur d'un certificat signant, permettant l'encapsulation puis l'archivage de tout ou partie des transaction à fin de preuve (commande, règlement, mise, pari, gain...), ou de l'empreinte informatique résultante (« hash »).

Dans une troisième étape, le site marchand ou le site de jeu exige du requérant-joueur qu'il s'authentifie en indiquant son identifiant -ou, le cas échéant en présentant son certificat- . Cette étape fondamentale permet à l'opérateur ou à la plateforme intermédiaire PI de s'assurer que le requérant-joueur est adulte par le calcul de l'âge (match date de naissance indiquée sur l'identifiant et horloge d'horodatage), permet de vérifier l'état créditeur du sous-compte (condition express pour pouvoir acheter ou jouer en ligne), permet l'archivage des transactions si les options avantageuses ont été mises en oeuvre (traçabilité, lute contre les fraudes et le blanchiment d'argent.

On va maintenant décrire une alternative de mise en oeuvre de l'invention, incluant un traitement automatisé par lecture optique des champs de formulaires conçus à cette fin, scan, pièce d'identité électronique, etc.

Dans une première étape, un requérant joueur adulte fait parvenir à « l'Autorité Opérationnelle des Jeux en Ligne » (AOJL) un support d'identité (régalien)+ RIB ou référence bancaire. CB + autorisation de prélèvement.

Dans une seconde étape, après saisie, traitement et vérifications (de majorité notamment), l'AOJL délivre au requérant joueur un identifiant, par exemple, un certificat signant, et lui ouvre un compte de jeux en ligne, exclusivement dédié aux sites de jeux d'argent légaux, dont les montants créditeurs et les débits unitaires par mise sont plafonnés.

Dans une troisième étape, pour accéder à l'un des sites de jeux d'argent en lignes légaux, le joueur présente son certificat, le site en contrôle la validité, et vérifie si le compte jeux en ligne est créditeur..

Dans une quatrième étape, les vérifications étant effectuées, le joueur adulte peut alors jouer et miser dans les limites financières des plafonnements de son compte. Pour confirmer sa mise, le joueur utilise son certificat et confirme en les signant électroniquement ses choix.

Dans une cinquième étape, le compte du joueur se décrémente du montant de sa mise, mise dont le montant va se trouver crédité pour partie au profit de l'opérateur du jeu, pour partie au profit du fisc. Le recouvrement fiscal peut donc avoir lieu dès la mise du joueur.

La sixième étape constitue l'étape de jeu proprement dite qui se solde par la perte de la mise ou par un gain.

Dans une septième étape, en cas de gain, l'opérateur de jeu en ligne crédite le compte de l'AOJL en précisant les références du certificat du joueur. L'AOJL crédite alors le compte jeu du joueur du montant de son gain. (Le compte joueur pourrait également se trouver directement crédité par l'opérateur).

Dans une huitième étape, afin d'assurer la traçabilité et la transparence complète de l'activité, l'AOJL peut archiver les transactions électroniques ou leurs empreintes.

Il est entendu que les données de transaction pourront être de toute nature, y compris financière. Il est également entendu que ledit compte utilisateur comportera, pour certains types de données numériques, la possibilité d'un paramétrage des niveaux plancher ou plafond de la valeur des données numériques possible sur ledit compte utilisateur.

Bien sûr, l'invention n'est pas limitée aux exemples qui viennent d'être décrits et de nombreux aménagements peuvent être apportés à ces exemples sans sortir du cadre de l'invention. Ainsi, le procédé de contrôle d'accès selon l'invention permettra d'ouvrir le marché des jeux prépayés à des applications actuellement non concernées telles que des jeux pédagogiques, des jeux à scores, des jeux en réseau, ou toute autre forme de jeux en ligne.

Le procédé de contrôle d'accès selon l'invention peut aussi être mis en oeuvre pour le filtrage de l'accès à des produits dont la consommation est réglementée, notamment des boissons alcoolisées ou du tabac, ainsi que des équipements automatisés de distribution sélective de produits dont l'accès n'est autorisé qu'à des catégories déterminées de consommateurs selon des critères discriminants.

Le procédé selon l'invention peut aussi être mis en oeuvre dans des systèmes d'information incluant des bases de données contenant des informations confidentielles relatives à des personnes et qui pourraient être consultées indirectement via des sources primaires d'informations d'accès selon l'invention ne contenant que des informations d'adressage et non les informations confidentielles elles-mêmes.

Il peut en particulier être utilisé pour un contrôle d'accès à des contenus de toute nature, écrits, visuels, sonores, audio-visuels, tant éditoriaux qu'artistiques ou commerciaux, publicitaires notamment.

## Revendications

1. Procédé pour contrôler l'accès à des sites ou contenus, notamment à des jeux ou sites en ligne sur un réseau de communication tel qu'Internet ou un réseau de communication mobile, comprenant, en un site d'intermédiation connecté via ledit réseau de communication à une pluralité de sites en ligne:
- une étape (1) pour recevoir d'un terminal utilisateur connecté via ledit réseau de communication audit site d'intermédiation, des informations personnelles relatives à un utilisateur dudit terminal, ces informations personnelles comprenant des informations d'identité,
- une étape (2) pour traiter lesdites informations personnelles selon au moins un critère discriminant, pour générer des données de certificat numérique sous condition de satisfaction dudit critère discriminant, et pour transmettre lesdites données de certificat numérique audit terminal utilisateur,
- une étape (3) pour permettre une connexion dudit terminal utilisateur via ledit réseau de communication à au moins un site parmi ladite pluralité de sites en ligne,
- une étape (4) pour gérer au sein dudit site d'intermédiation un compte attaché audit utilisateur, ce compte intégrant une pluralité de données attachées respectivement à des transactions effectuées entre ledit terminateur utilisateur et le ou lesdits sites connectés parmi ladite pluralité de sites en ligne, et
- une étape (5) pour traiter les données de transaction intégrées dans ledit compte utilisateur et pour délivrer vers un site tiers connecté via ledit réseau de communication des données de prélèvement issues du traitement desdites données de transaction.

2. Procédé de contrôle d'accès selon la revendication 1, **caractérisé en ce qu'**il comprend en outre, à partir du site d'intermédiation, une étape pour archiver des données de transaction effectuées entre ledit terminal utilisateur et des sites en ligne via ledit site d'intermédiation.

3. Procédé de contrôle d'accès selon l'une des revendications 1 ou 2, **caractérisé en ce qu'**il comprend en outre :
- en un site de distribution connecté au réseau de communication,
- une étape pour saisir, en réponse à une demande d'accès à des sites ou contenus émise par une personne requérante et à un filtrage sur l'âge de ladite personne requérante, une information de validation de ladite demande,
- une étape pour délivrer, après saisie de ladite information de validation, un support de contrôle d'accès (SP) comprenant des données de référence unique,
- sur le site d'intermédiation faisant fonction de serveur opérateur desdits sites ou contenus,:
- une étape pour recevoir et traiter lesdites données de référence unique saisies à partir d'un terminal utilisé par ladite personne requérante et connecté audit serveur opérateur, et
- une étape pour procurer, après traitement, audit requérant un accès à au moins un desdits sites ou contenus depuis ledit terminal.

4. Procédé selon la revendication 3, **caractérisé en ce que** les données de référence associées à chaque support sont uniques et anonymes.

5. Procédé selon l'une des revendications 3 ou 4, pour contrôler l'accès à des jeux en ligne sur un réseau de communication tel qu'Internet ou un réseau de communication mobile, **caractérisé en ce qu'**il comprend en outre, à l'issue d'une session de jeu, une étape pour associer au support de contrôle d'accès, des données sur le(s) gain(s) réalisé(s) pendant ladite session de jeu.

6. Procédé selon la revendication 5, **caractérisé en ce qu'**il comprend en outre une étape pour détruire ou effacer les données de référence et/ou les données de gain associées au support de contrôle d'accès.

7. Procédé selon l'une quelconque des revendications 5 ou 6, **caractérisé en ce qu'**il comprend en outre, préalablement au paiement d'un gain, une étape pour accéder à des données de preuve et les confronter à des données actualisées contenues dans ledit support ou associées audit support.

8. Procédé selon l'une quelconque des revendications 3 à 7, **caractérisé en ce que** le support est de nature matérielle.

9. Procédé selon l'une quelconque des revendications 3 à 7, **caractérisé en ce que** le support prépayé est dématérialisé, les données de référence, de crédit et de gain étant stockés dans un site distant connecté via un réseau de communication au site de jeux et à l'opérateur de distribution.

10. Procédé de contrôle d'accès selon l'une quelconque des revendications précédentes, caractérisé que l'étape de traitement d'informations personnelles d'un utilisateur requérant un accès à au moins un site en ligne met en oeuvre un procédé pour produire une information représentative de droits d'accès d'une personne à des sites, à des produits, des contenus informatifs ou services, comprenant :
- une étape pour extraire d'une source primaire d'information relative à ladite personne, une information discriminante,
- une étape pour traiter cette information discriminante et produire au moins un marqueur discriminant,
- une étape pour appliquer ledit marqueur discriminant au sein d'un support d'accès,
et
- une étape pour générer ladite information représentative de droits d'accès à partir dudit au moins un marqueur et d'une information de filtrage discriminant.

11. Procédé selon la revendication 10, **caractérisé en ce que** les marqueurs produits comprennent un marqueur de l'âge de la personne et **en ce que** l'information de filtrage discriminant comprend une information d'horodatage.

12. Procédé selon l'une quelconque des revendications 10 ou 11, **caractérisé en ce que** les marqueurs produits comprennent au moins un marqueur d'un événement chronologique en relation avec l'âge de la personne.

13. Procédé selon l'une quelconque des revendications 10 à 12, **caractérisé en ce qu'**il comprend en outre une étape pour produire au moins un marqueur dit provisoire à partir d'une d'information issue de la source primaire d'information et d'une information d'horodatage.

14. Procédé selon la revendication 13, **caractérisé en ce qu'**il comprend en outre une étape pour inhiber un marqueur provisoire par péremption préprogrammée en relation avec l'information d'horodatage.

15. Procédé selon l'une des revendications 13 ou 14, **caractérisé en ce qu'**il comprend en outre une étape pour inhiber un marqueur provisoire par péremption à une date prédéterminée.

16. Procédé selon l'une quelconque des revendications 10 à 15, **caractérisé en ce qu'**il est mis en oeuvre avec des supports d'accès dématérialisés ou virtuels.

17. Procédé selon la revendication 16, **caractérisé en ce qu'**il est mis en oeuvre avec un support d'accès constitué par un numéro de téléphone ou une adresse de courrier électronique d'une personne requérante, ce numéro de téléphone ou cette adresse de courrier électronique étant déterminé à partir d'au moins un marqueur obtenu à partir d'une information en relation avec l'âge de ladite personne requérante extraite d'une source primaire d'information associée à ladite personne requérante.

18. Procédé selon l'une quelconque des revendications 10 à 17, **caractérisé en ce qu'**un marqueur discriminant au sein d'un support d'accès contient un lien à des informations relatives à la personne requérante qui sont stockées dans une base de données distante.

19. Système pour contrôler l'accès d'un utilisateur d'un terminal à une pluralité de sites en ligne connectés via un réseau de communication, mettant en oeuvre le procédé de contrôle d'accès selon l'une quelconque des revendications précédentes, comprenant un site d'intermédiation entre ledit terminal utilisateur et la pluralité de sites en ligne, ce site d'intermédiation comprenant :
- des moyens pour recevoir d'un terminal utilisateur connecté via ledit réseau de communication audit site d'intermédiation, des informations personnelles relatives à un utilisateur dudit terminal, ces informations personnelles comprenant des informations d'identité,
- des moyens pour traiter lesdites informations personnelles selon au moins un critère discriminant, pour générer des données de certificat numérique sous condition de satisfaction dudit critère discriminant, et pour transmettre lesdites données de certificat numérique audit terminal utilisateur,
- des moyens pour permettre une connexion dudit terminal utilisateur via ledit réseau de communication à au moins un site parmi ladite pluralité de sites en ligne,
- des moyens pour gérer au sein dudit site d'intermédiation un compte attaché audit utilisateur, ce compte intégrant une pluralité de données attachées respectivement à des transactions effectuées entre ledit terminateur utilisateur et le ou lesdits sites connectés parmi ladite pluralité de sites en ligne, et
- des moyens pour traiter les données de transaction intégrées dans ledit compte utilisateur et pour délivrer vers un site tiers connecté via ledit réseau de communication des données de prélèvement issues du traitement desdites données de transaction.

20. Système de contrôle d'accès selon la revendication 19, **caractérisé en ce qu'**il comprend en outre au moins en au moins un site de distribution connecté au réseau de communication,
- des moyens pour saisir, en réponse à une demande d'accès à des sites ou contenus émise par une personne requérante et à un filtrage sur l'âge de ladite personne requérante, une information de validation de ladite demande,
- des moyens pour délivrer, après saisie de ladite information de validation, un support de contrôle d'accès SP comprenant des données de référence unique,
- sur le site d'intermédiation faisant fonction de serveur opérateur desdits sites ou contenus, connecté au réseau de communication:
- des moyens pour recevoir et traiter lesdites données de référence unique saisies à partir d'un terminal utilisé par ladite personne requérante et connecté audit serveur opérateur, et
- des moyens pour procurer, après traitement, audit requérant un accès à au moins un desdits sites ou contenus depuis ledit terminal.

21. Système (S) selon la revendication 20, **caractérisé en ce qu'**il comprend en outre, au niveau du site de distribution, des moyens pour neutraliser ou effacer les données de référence contenues dans le support.

22. Système de contrôle d'accès selon l'une quelconque des revendications 19 à 21, **caractérisé en ce qu'**il comprend en outre un système pour produire une information représentative de droits d'accès d'une personne à des sites, des contenus informatifs, à des produits ou services, mettant en oeuvre le procédé selon l'une quelconque des revendications 10 à , comprenant :
- des moyens pour extraire d'une source primaire d'information en relation avec ladite personne, une information discriminante, notamment en relation avec l'âge de ladite personne,
- des moyens pour traiter cette information discriminante et produire au moins un marqueur discriminant,
- des moyens pour appliquer ledit marqueur discriminant au sein d'un support d'accès,
et,
- des moyens de filtrage discriminant prévus pour générer ladite information représentative de droits d'accès à partir dudit au moins un marqueur ainsi appliqué et d'une information de filtrage discriminant.

23. Support de contrôle d'accès à une pluralité de sites en ligne, mis en oeuvre dans le procédé de contrôle d'accès selon l'une quelconque des revendications 1 à 19, **caractérisé en ce qu'**il est généré par traitement de données personnelles fournies par un utilisateur requérant, sous condition d'au moins un critère discriminant appliqué à au moins une partie desdites données personnelles.

24. Support de contrôle d'accès selon la revendication 23, **caractérisé en ce qu'**il est prévu pour contenir au moins un marqueur discriminant produit à partir d'un traitement d'une information discriminante extraite d'une source primaire d'information en relation avec l'utilisateur requérant.

25. Support de contrôle d'accès selon l'une des revendications 23 ou 24, **caractérisé en ce qu'**il est émis sous une forme électronique par le site d'intermédiation après traitement de données personnelles reçues d'un terminal utilisateur.
